# EUROPÄISCHE PATENTANMELDUNG

(11) **EP 4 477 999 A1**
(43) Veröffentlichungstag der Anmeldung: **18.12.2024**
(21) Anmeldenummer: 24181991.1
(22) Anmeldetag: 13.06.2024
(51) Int. Cl.: G01C 23/00, G08G 5/02

(54) **VERFAHREN UND COMPUTERPROGRAMM ZUM BESTIMMEN VON KONFIGURATIONSINFORMATIONEN**

(30) Priorität: 13.06.2023 DE 102023115349
(71) Anmelder: Deutsches Zentrum für Luft- und Raumfahrt e.V., 53227 Bonn-Oberkassel (DE)
(72) Erfinder: Deiler, Christoph, 38106 Braunschweig (DE); Vechtel, Dennis, 38100 Braunschweig (DE); Abdelmoula, Fethi, 38116 Braunschweig (DE); Schmitz, Gregor, 38114 Braunschweig (DE); Kurz, Joscha, 38102 Braunschweig (DE)
(74) Vertreter: Gramm, Lins & Partner Patent- und Rechtsanwälte PartGmbB

(57) **Zusammenfassung**

Die Erfindung betrifft ein Verfahren zum nachträglichen Bestimmen von Konfigurationsinformationen innerhalb eines Anflugprofils eines Flugzeuges, wobei das Verfahren die folgenden durch eine elektronische Datenverarbeitungsanlage ausgeführten Schritte umfasst:
- Bereitstellen eines tatsächlichen Anflugprofils eines tatsächlichen Anflugs eines Flugzeugs, wobei das Anflugprofil für verschiedene räumliche und/oder zeitliche Entfernungen von einem Aufsetzpunkt aus jeweils mindestens eine Flugzustandsinformation des im Anflug befindlichen Flugzeugs enthält,
- Bereitstellen eines Flugleistungsmodells betreffend das im Anflug befindliche Flugzeug, um Flugleistungsinformationen über den gesamten Anflug des Flugzeugs zu modellieren,
- Bereitstellen von anfänglichen Konfigurationsinformationen innerhalb des Anflugprofils,
- Erstellen eines simulierten Anflugprofils mittels einer Anflugsimulation unter Berücksichtigung der Konfigurationsinformationen und des bereitgestellten Flugleistungsmodells, wobei das simulierte Anflugprofil für verschiedene räumliche und/oder zeitliche Entfernungen vom Aufsetzpunkt aus jeweils simulierte Flugzustandsinformationen eines simulierten Anflugs des Flugzeugs enthält,
- Ermitteln einer Abweichung zwischen dem simulierten Anflugprofil und dem tatsächlichen Anflugprofil,
- Variieren der Konfigurationsinformationen in Abhängigkeit von der ermittelten Abweichung, und
- Wiederholen der Schritte des Erstellens des simulierten Anflugprofils, Ermitteln der Abweichung und Variieren der Konfigurationsinformationen solange, bis die ermittelte Abweichung einem vorgegebenen Gütemaß entspricht.

## Beschreibung

Die Erfindung betrifft ein Verfahren zum nachträglichen Bestimmen von Konfigurationsinformationen innerhalb eines Anflugprofils eines Flugzeuges. Die Erfindung betrifft ebenso ein Computerprogramm zur Ausführung des Verfahrens hierzu.

Eine in der Luftfahrt häufig vorkommende Problemstellung ist die Ermittlung von Systemzuständen des Flugzeugs zur Rekonstruktion oder Vorhersage des Flugverlaufes. Bis heute sind die unter operationeller Bedingungen frei zur Verfügung stehenden Daten hierzu sehr beschränkt und beinhalten nur teilweise die zur Rekonstruktion benötigten Informationen.

So wird z.B. für die Bestimmung von Lärm im An- und Abflugbereich von Flughäfen die genaue Konfiguration des Flugzeugs (Konfiguration der Hochauftriebshilfen und/oder des Fahrwerks) entlang des Flugpfades benötigt, um konkrete Aussagen über die Lärmbelastung am Boden treffen zu können. Nur wer diesen örtlichen bzw. räumlichen und/oder zeitlichen Verlauf des Konfigurationzustandes des Flugzeugs innerhalb des betrachteten Bereiches kennt, kann den Lärm und seine Ausbreitung genau bestimmen, um so beispielsweise eine Lärmreduzierung/-minderung zum Schutz der Bevölkerung anzustreben. Jedoch liegen in der Regel nur Radar- oder ADS-B Daten vor, welche zwar maßgeblich Informationen über den Flugweg des Flugzeugs beinhalten, nicht jedoch die konkreten Systemzustände. Diese müssen ggf. nachträglich bestimmt werden, um eine Auswertung des Lärms bezogen auf die Konfiguration des Flugzeugs durchführen zu können.

Die bisherigen Ansätze, um die Konfigurationsinformationen eines Flugzeuges zu bestimmen, sind äußerst komplex und benötigen oftmals eine Vielzahl von zusätzlichen Informationen. Aufgrund der Komplexität gelangen diese Ansätze oft schnell an verschiedene Grenzen, welche nicht einfach zu überwinden sind. Dadurch sinkt die Genauigkeit und verringert so den brauchbaren Nutzen.

Es ist daher Aufgabe der vorliegenden Erfindung ein verbessertes Verfahren zum nachträglichen Bestimmen von Konfigurationsinformationen anzugeben, für das nur wenige Informationen notwendig sind und dennoch eine hohe Genauigkeit aufweist.

Die Aufgabe wird mit dem Verfahren gemäß Anspruch 1 erfindungsgemäß gelöst. Vorteilhafte Ausgestaltungen der Erfindung finden sich in den entsprechenden Unteransprüchen.

Gemäß Anspruch 1 wird ein Verfahren zum nachträglichen Bestimmen von Konfigurationsinformationen innerhalb eines Anflugprofils eines Flugzeuges vorgeschlagen, wobei das Verfahren die folgenden durch eine elektronische Datenverarbeitungsanlage ausgeführten Schritte umfasst:
- Bereitstellen eines tatsächlichen Anflugprofils eines tatsächlichen Anflugs eines Flugzeugs, wobei das Anflugprofil für verschiedene räumliche und/oder zeitliche Entfernungen von einem Aufsetzpunkt aus jeweils mindestens eine Flugzustandsinformation des im Anflug befindlichen Flugzeugs enthält,
- Bereitstellen eines Flugleistungsmodells betreffend das im Anflug befindliche Flugzeug, um Flugleistungsinformationen über den gesamten Anflug des Flugzeugs zu modellieren,
- Bereitstellen von anfänglichen Konfigurationsinformationen innerhalb des Anflugprofils,
- Erstellen eines simulierten Anflugprofils mittels einer Anflugsimulation unter Berücksichtigung der Konfigurationsinformationen und des bereitgestellten Flugleistungsmodells, wobei das simulierte Anflugprofil für verschiedene räumliche und/oder zeitliche Entfernungen vom Aufsetzpunkt aus jeweils simulierte Flugzustandsinformationen eines simulierten Anflugs des Flugzeugs enthält,
- Ermitteln einer Abweichung zwischen dem simulierten Anflugprofil und dem tatsächlichen Anflugprofil,
- Variieren der Konfigurationsinformationen in Abhängigkeit von der ermittelten Abweichung, und
- Wiederholen der Schritte des Erstellens des simulierten Anflugprofils, Ermitteln der Abweichung und Variieren der Konfigurationsinformationen solange, bis die ermittelte Abweichung einem vorgegebenen Gütemaß entspricht.

Zunächst wird einer elektronischen Datenverarbeitungsanlage ein tatsächliches Anflugprofil eines tatsächlichen Anflugs eines Flugzeugs bereitgestellt, wobei dieser Anflug bereits erfolgt und vollständig abgeschlossen ist. Dieses Anflugprofil enthält dabei entsprechende Flugzustandsinformationen des im Anflug befindlichen Flugzeugs, und zwar in Abhängigkeit der räumlichen (örtlichen) und/oder zeitlichen Entfernung zum Aufsetzpunkt. Die räumliche und/oder zeitliche Entfernung in Bezug auf den Aufsetzpunkt kann dabei in Bezug auf diejenige Landebahn des Flughafens definiert werden, auf der das Flugzeug tatsächlich gelandet ist. Das Anflugprofil enthält somit für verschiedene räumliche und/oder zeitliche Entfernungen jeweils mindestens eine Flugzustandsinformationen des Flugzeugs. Damit kann für eine beliebige Entfernung im Bezug zu dem Aufsetzpunkt (bspw. am Flughafen auf der Landebahn) mindestens eine entsprechende Flugzustandsinformation des Flugzeugs während des Anflugs aus dem tatsächlichen Anflugprofil bestimmt werden, da in dem Anflugprofil die entsprechenden Flugzustandsinformationen während des Anflugs enthalten und in Bezug zur Entfernung zum Aufsetzpunkt gesetzt sind.

Des Weiteren wird ein Flugleistungsmodell des betreffenden Flugzeugs, zudem das tatsächliche Anflugprofil bereitgestellt wurde, bereitgestellt, um Flugleistungsinformationen über den gesamten Anflug des Flugzeugs zu modellieren. Solche Flugleistungsinformationen, die sich aus dem Flugleistungsmodell modellieren lassen, können beispielsweise aerodynamische Kennwerte wie der Widerstandsbeiwert zusammen mit dem erwarteten Triebwerksschub sein. Durch ein geeignetes Flugleistungsmodell, das in Abhängigkeit von dem aktuellen Flugzustand mindestens den erwarteten Triebwerksschub und den aerodynamischen Widerstand liefert, wird die jeweilige Beschleunigung des Flugzeuges während des Anflugs berechnet. So ein Flugleistungsmodell kann dabei beispielsweise BADA (Base of Aircraft Data von Eurocontrol) oder ANP (Aircraft Noise and Performance von Eurocontrol) sein.

Schließlich werden zur Durchführung des Verfahrens anfängliche Konfigurationsinformationen innerhalb des Anflugprofils als Startwerte angenommen. Eine Konfigurationsinformation beinhaltet dabei eine Information bzgl. einer Veränderung mindestens einer Flugzeugkonfiguration innerhalb des Anflugprofils in Bezug zum Aufsetzpunkt. Eine solche Konfigurationsinformation wird dabei in Bezug zur räumlichen und/oder zeitlichen Entfernung zum Aufsetzpunkt innerhalb des Anflugprofils definiert.

Eine solche Konfigurationsinformation beinhaltet dabei insbesondere die Art der Veränderung der Konfiguration, beispielsweise die Veränderung der Konfiguration der Hochauftriebshilfen und/oder die Veränderung der Konfiguration des Fahrwerks. Wird beispielsweise die Konfiguration der Hochauftriebshilfen verändert, so wird innerhalb des Anflugprofils die räumlichen und/oder zeitliche Position, an der die Konfiguration der Hochauftriebshilfen verändert wurde, als Konfigurationspunkt definiert, wobei für den Konfigurationspunkt weiterhin die neue Konfiguration der Hochauftriebshilfen definiert wird. So können beispielsweise bei einem standardmäßigen Anflugprofil je nach Flugzeugtyp bspw. drei Konfigurationspunkte definiert werden, nämlich zum einen der Moment, wo das Fahrwerk ausgefahren wird und zum anderen die beiden Momente, an denen die Konfiguration der Hochauftriebshilfen verändert wird. Die Anzahl der Konfigurationspunkte kann dabei von dem Flugzeugtyp abhängen, je nachdem wie viele Konfigurationen der Hochauftriebshilfen für den jeweiligen Flugzeugtyp bei einem standardmäßigen Anflug vorgesehen sind. Vorteilhafterweise wird die notwendige Anzahl der Konfigurationspunkte, die für den Anflug und das Flugzeug normalerweise vorgesehen sind, der Simulation vorgegeben.

Mithilfe einer Anflugsimulation wird nun ein simuliertes Anflugprofil erstellt. Dabei wird unter Berücksichtigung der zunächst anfänglich angenommenen Konfigurationsinformationen und des bereitgestellten Flugleistungsmodells ein Anflug auf den Aufsetzpunkt simuliert, um ein simuliertes Anflugprofil zu erstellen. Das simulierte Anflugprofil enthält dabei für verschiedene räumliche und/oder zeitliche Entfernungen vom Aufsetzpunkt entsprechende simulierte Flugzustandsinformationen. Die Veränderung der Flugzeugkonfiguration an den zunächst anfänglichen Konfigurationspunkten hat dabei Auswirkungen auf die Flugleistung des Flugzeugs zu den einzelnen Zeitpunkten während des Anflugs und somit auf das simulierte Anflugprofil.

Anschließend wird zwischen dem simulierten Anflugprofil und dem tatsächlichen Anflugprofil eine Abweichung ermittelt, indem beispielsweise das simulierte Anflugprofil mit dem tatsächlichen Anflugprofil verglichen wird oder eine mathematische Kostenfunktion berechnet wird. Basierend auf dieser Abweichung werden nun die Konfigurationsinformationen (insbesondere die Konfigurationspunkte und Konfigurationszustände) variiert, beispielsweise in dem die Position der Veränderung der Konfiguration innerhalb des Anflugprofils verändert wird. Dabei wird die Veränderung der Konfigurationsinformationen insbesondere dahingehend erfolgen, dass die Abweichung zwischen einem simulierten Anflugprofil und dem tatsächlichen Anflugprofil verringert wird. Dies kann bspw. dadurch geschehen, dass durch eine Variation der Konfigurationsinformationen das Ergebnis der mathematischen Kostenfunktion verändert wird. Die Konfigurationsinformationen werden durch einen geeigneten mathematischen Optimierungsalgorithmus so variiert, dass das Ergebnis der Kostenfunktion minimiert wird.

Dieser Vorgang wird nun wiederholt, indem erneut ein simuliertes Anflugprofil erstellt wird, bei dem jedoch die variierten Konfigurationspunkte berücksichtigt werden. Anschließend wird dieses erneut simulierte Anflugprofil wieder mit dem tatsächlichen Anflugprofil verglichen und es wird wieder eine Abweichung ermittelt. Ist diese Abweichung zu der vorhergehenden Abweichung kleiner geworden, so führt dies zu einer Annäherung an die tatsächliche Konfiguration.

Dieses Vorgehen wird nun solange wiederholt, bis ein vorgegebenes Gütemaß erreicht wurde. Ein solches Gütemaß kann beispielsweise durch einen Schwellenwert definiert werden, der bei der Abweichung zwischen dem simulierten Anflugprofil und dem tatsächlichen Anflugprofil erreicht werden muss, damit das simulierte Anflugprofil im Wesentlichen dem tatsächlichen Anflugprofil entspricht. Es handelt sich dabei vorzugsweise um ein Optimierungsproblem mit der Abweichung (Fehler) zwischen simuliertem und tatsächlichem Anflugprofil als Zielgröße und den Konfigurationsinformationen (Konfigurationspunkt und Konfigurationszustand) als Optim ierungsparameter.

Das tatsächliche Anflugprofil kann dabei als Flugzustandsinformationen insbesondere den zeitlichen Verlauf der Position des Flugzeugs enthalten. Hieraus lässt sich dann für eine gewisse räumliche und/oder zeitliche Entfernung vom Aufsetzpunkt die Höhe sowie unter Berücksichtigung des zeitlichen Verlaufes auch die Geschwindigkeit über Grund ableiten.

Das simulierte Anflugprofil enthält für eine gewisse räumliche und/oder zeitliche Entfernung vom Aufsetzpunkt insbesondere die Höhe sowie ebenfalls auch die Geschwindigkeit des Flugzeugs über Grund. Das simulierte Anflugprofil kann dabei ebenso einen simulierten zeitlichen Verlauf der Höhe und der Geschwindigkeit über Grund in Bezug zu dem Aufsetzpunkt beinhalten.

Mithilfe der vorliegenden Erfindung wird es möglich, nachträglich die Konfigurationsinformationen (Konfigurationspunkte, Konfigurationszustand) eines tatsächlichen Anflugs zu bestimmen, ohne dass auf komplexe und ausführliche Systemmodelle zurückgegriffen werden muss. Das vorliegende Verfahren lässt sich dabei ohne Aufwand direkt auf jegliche Flugzeugmuster adaptieren, solange für die verschiedenen Flugzeugmuster die entsprechenden Flugleistungsmodelle sowie die relevanten Informationen über die Hochauftriebshilfen vorliegen. Denn es werden allgemein gültige Zusammenhänge der Flugphysik verwendet, wodurch die Methode durch einfache Änderungen der flugspezifischen Flugleistungsmodelle an jeden Flugzeugtyp angepasst werden kann.

Des Weiteren liefert das vorliegende Verfahren eine schnelle und zuverlässige Methode zum Auffinden der Konfigurationspunkte aus in der Regel frei verfügbaren Datensätzen eines tatsächlichen Anflugs, wie beispielsweise Radardaten oder ADS-B Daten.

Unter einem Aufsetzpunkt im Sinne der vorliegenden Erfindung wird dabei der Punkt/Ort verstanden, an dem das Flugzeug auf der Landebahn aufsetzt.

Unter einem Anflugprofil im Sinne der vorliegenden Erfindung wird der zeitliche Verlauf einer oder mehrerer Flugzustandsinformationen wie bspw. Höhe und Geschwindigkeit über Grund bis zum Aufsetzpunkt verstanden.

Unter einer Konfigurationsinformation wird insbesondere die Position einer Veränderung der Konfiguration des Flugzeuges innerhalb des Anflugprofils verstanden. Eine solche Position wird auch Konfigurationspunkt genannt. Dabei kann die Konfigurationsinformation nicht nur den Konfigurationspunkt enthalten, sondern zu jedem Konfigurationspunkt auch die vor der Änderung bestehende Konfiguration und/oder die nach der Änderung eingenommene Konfiguration. Die Konfiguration eines Flugzeugs wird im Sinne dieser Erfindung auch Konfigurationszustand genannt.

Die Änderung der Konfiguration der Hochauftriebshilfen bspw. erfolgt während des Anflugs in definierten Stufen, die von den Piloten mit Hilfe des Klappenhebels gewählt werden. Als Konfigurationspunkte werden dabei die Punkte im Anflugprofil verstanden, an denen die Konfiguration der Hochauftriebshilfen bzw. des Fahrwerks geändert wird. Die Konfigurationspunkte können ebenfalls sowohl in Abhängigkeit der Zeit oder des Abstandes zum Aufsetzpunkt definiert werden. Der Konfigurationspunkt gibt auch Auskunft über die Art der Änderung, also von welcher Konfiguration zu welcher Konfiguration. Bei bekannten Konfigurationspunkten kann der Verlauf der Konfiguration der Hochauftriebshilfen und des Fahrwerks über der Zeit bzw. Abstand zum Aufsetzpunkt dargestellt werden.

Unter dem Stabilisierungspunkt wird dabei derjenige Punkt im Anflugprofil verstanden, ab dem das Flugzeug im normalen Anflug seinen finalen Konfigurationszustand und finale Endanfluggeschwindigkeit erreicht hat und bis kurz vor der Landung (Aufsetzen am Aufsetzpunkt) nicht mehr verändert bzw. hält.

Gemäß einer Ausführungsform ist vorgesehen, dass die Flugzustandsinformationen der Anflugprofile die Flughöhe, die Geschwindigkeit über Grund und/oder Position des Flugzeugs sind.

So können die Flugzustandsinformationen beispielsweise grundsätzlich zunächst erst einmal die ursprünglichen Messdaten darstellen. Dies wäre im einfachsten Fall die dreidimensionale Position des Luftfahrzeuges einschließlich einer Zeit- und/oder Abstandsinformation zum Aufsetzpunkt. Das Anflugprofil kann dabei eine Vielzahl solcher Flugzustandsinformationen in Form von Position des Flugzeuges enthalten, sodass das Anflugprofil einen räumlichen und/oder zeitlichen Verlauf der dreidimensionalen Position des Luftfahrzeuges zum Aufsetzpunkt abbildet. Aus diesen Positionsdaten und ihren Zeitinformationen lässt sich dann beispielsweise die Flughöhe und die Geschwindigkeit über Grund bestimmen, sodass aus diesem Anflugprofil mit Flugzustandsinformationen in Form von Positionsdaten des Flugzeugs ein räumlicher und/oder zeitlicher Verlauf der Flughöhe und der Geschwindigkeit über Grund bis zum Aufsetzpunkt abgeleitet werden kann.

Denkbar ist aber auch, dass die Flugzustandsinformationen bereits die Flughöhe und die Geschwindigkeit über Grund darstellen, sodass für jede definierte räumliche und/oder zeitliche Entfernung bis zum Aufsetzpunkt in dem Anflugprofil jeweils eine Flughöhe und eine Geschwindigkeit über Grund definiert ist. Damit enthält das Anflugprofil in diesem Fall einen räumlichen und/oder zeitlichen Verlauf der Flughöhe und der Geschwindigkeit über Grund bis zum Aufsetzpunkt.

Gemäß einer Ausführungsform ist vorgesehen, dass Flugwetterinformationen bzgl. des tatsächlichen Anflugs des Flugzeugs bereitgestellt werden, wobei das Erstellen des simulierten Anflugprofils mittels der Anflugsimulation weiterhin unter Berücksichtigung der bereitgestellten Flugwetterinformationen erfolgt.

Solche Flugwetterinformationen können dabei insbesondere Windinformationen zum Zeitpunkt des Anflugs enthalten, bspw. die Windrichtung und Windgeschwindigkeit. Dabei kann vorgesehen sein, dass das Anflugprofil einen räumlichen und/oder zeitlichen Verlauf von Flugwetterinformationen bis zum Aufsetzpunkt, beispielsweise in Form eines Verlaufes der Windrichtung und Windgeschwindigkeit, beinhaltet. Dadurch werden die Eingangsdaten der Simulation genauer, sodass die geschätzten Konfigurationspunkte ggf. genauer getroffen werden.

Gemäß einer Ausführungsform ist vorgesehen, dass mittels der Anflugsimulation das simulierte Anflugprofil ausgehend von dem Aufsetzpunkt entgegen der Flugrichtung des Flugzeugs erstellt wird.

In dieser besonders bevorzugten Ausführungsform wird das simulierte Anflugprofil ausgehend vom Aufsetzen des Flugzeugs auf der Landebahn (Aufsetzpunkt) entgegen der Flugrichtung (Rückwärtssimulation) gerechnet bzw. simuliert. Dabei werden bevorzugt ausschließlich einfache flugphysikalische Zusammenhänge genutzt. Hierbei werden die Flugleistungsinformationen des Flugleistungsmodells, wie beispielsweise der aktuelle Widerstandsbeiwert und der erwartete Schub des spezifischen Flugzeugs, genutzt, um den aktuellen Beschleunigungszustand des Flugzeugs bestimmen zu können. Die Rückwärtssimulation hat hierbei den Vorteil, dass der anfängliche Flugzustand des Flugzeugs auf der Landebahn landenden Flugzeugs, weitestgehend bekannt ist, sodass nicht mit geschätzten Zustandswerten wie bei einer Vorwärtssimulation begonnen werden muss. Es wird somit die Rückwärtssimulation damit begonnen, dass der Simulation derjenige Flugzustand als Startparameter zugrunde gelegt wird, der beim Landen des Flugzeugs auf der Landebahn vorherrscht. Dieser Flugzustand ist im Allgemeinen weitestgehend bekannt (innerhalb von Grenzen). Die meisten Flugzeuge besitzen mehr als eine Konfiguration der Hochauftriebshilfen, in der eine Landung möglich ist (Landekonfiguration). Diese Landekonfiguration kann jedoch, sofern nicht bekannt, im Rahmen der Optimierung der Konfigurationspunkte mitbestimmt werden. Für die Abschätzung der ggf. unbekannten Flugzeugmasse finden sich in der Literatur verschiedene Methoden.

Dabei wird bevorzugt die Simulation (sowohl vorwärts also rückwärts) segmentweise ausgeführt, wobei die Grenzen der einzelnen Segmente in der Regel durch vorgegebene Punkte innerhalb des Anflugprofils definiert sind. So ist es beispielsweise denkbar, dass bei einer Rückwärtssimulation diese in zwei Segmente eingeteilt wird, wobei die Grenzen der beiden Segmente durch den Stabilisierungspunkt innerhalb des Anflugprofils definiert sind. Das erste Segment wird dabei von dem Aufsetzpunkt bis zum Stabilisierungspunkt definiert, während das zweite Segment vom Stabilisierungspunkt bis zum Beginn des Anflugs (Simulationsende) definiert ist. Wenn keine Informationen über den Schubzustand vorliegen, kann bspw. für beide Segmente ein konstanter Leerlaufschub angenommen werden, was zumindest für das erste Segment nur eine starke Näherung darstellt.

Um auf Informationen über den Schubzustand (genaue Schubhebelstellung) verzichten zu können, wird vorzugsweise eine konstante Fluggeschwindigkeit (Landegeschwindigkeit) im ersten Segment vorgegeben, anstatt diese über den Beschleunigungszustand zu berechnen, da für die Berechnung der tatsächliche Schub erforderlich wäre. Im realen Anflug wird ab dem Erreichen der Stabilisierungshöhe bzw. Stabilisierungspunkt bis kurz vor der Landung am Aufsetzpunkt die Landegeschwindigkeit gehalten, sodass es sich um ein unbeschleunigtes Flugsegment handelt. I.d.R. ist die Fluggeschwindigkeit z.B. aufgrund von Windeinflüssen nicht exakt konstant. Daher ist es denkbar anstatt einer konstanten Fluggeschwindigkeit die "gemessene" Fluggeschwindigkeit (inkl. Schwankungen) vorzugeben, sodass Simulation und Messdaten im ersten Segment besser zusammenpassen. Wenn nur die Geschwindigkeit über Grund verfügbar ist, kann mit Hilfe von Windinformationen die "gemessene" Fluggeschwindigkeit bestimmt werden (Genauigkeit abhängig von den verfügbaren Windinformationen).

Im zweiten Segment kann die Geschwindigkeit aus dem Beschleunigungszustand berechnet werden, bspw. durch die am Flugzeug angreifende Kräfte: im Wesentlichen Schub und Widerstand. Dazu sind Informationen über den Schub erforderlich. Der Widerstand ergibt sich durch das Flugleistungsmodell in Abhängigkeit der Flugzeugkonfiguration (Klappen, Fahrwerk). Hier kann angenommen werden, dass Leerlaufschub anliegt, weil aus Lärm- und Effizienzgründen angestrebt wird mit Leerlauf anzufliegen. Flugleistungsmodelle stellen für bestimmte Schubniveaus (z.B. Leerlauf, "Vollgas") Informationen über den Schub bereit. Die genaue Schubhebelstellung für Schublevel zwischen Leerlauf und "Vollgas" ist jedoch unbekannt und kann auch nicht einfach bestimmt werden. Daher wird vereinfachend Leerlaufschub angenommen. Es hat sich gezeigt, dass diese Annahme eine sehr gute Abschätzung durch die Simulation erzeugt.

Gemäß einer Ausführungsform ist demnach vorgesehen, dass zunächst ein Stabilisierungspunkt festgelegt wird, ab dem das Flugzeug seine Endanfluggeschwindigkeit und seinen finalen Konfigurationszustand erreicht hat, wobei ein erstes Segment des simulierten Anflugprofils vom Aufsetzpunkt bis zum festgelegten Stabilisierungspunkt unter Berücksichtigung einer Endanfluggeschwindigkeit erstellt wird.

Gemäß einer Ausführungsform ist vorgesehen, dass das Variieren der Konfigurationsinformationen durch ein Optimierungsverfahren erfolgt, bei dem der Fehler zwischen dem tatsächlichen Anflugprofil und dem simulierten Anflugprofil solange minimiert wird, bis das vorgegebene Gütemaß erreicht ist.

Gemäß einer Ausführungsform ist vorgesehen, dass der Fehler mithilfe eines einfachen Gradientenverfahrens minimiert wird.

Die Aufgabe wird im Übrigen auch mit dem Computerprogramm gemäß Anspruch 10 erfindungsgemäß gelöst, wobei das Computerprogramm Programmcodemittel aufweist, die eingerichtet sind zur Durchführung des vorstehend beschriebenen Verfahrens, wenn das Computerprogramm auf einer Datenverarbeitungsanlage ausgeführt wird.

Die Erfindung wird anhand der beigefügten Figuren beispielhaften erläutert. Es zeigen:
- Figur 1: schematische Darstellung des Ablaufes des erfindungsgemäßen Verfahrens;
- Figur 2: schematische Darstellung eines Anflugprofils;
- Figur 3: Darstellung einer Beispielauswertung.

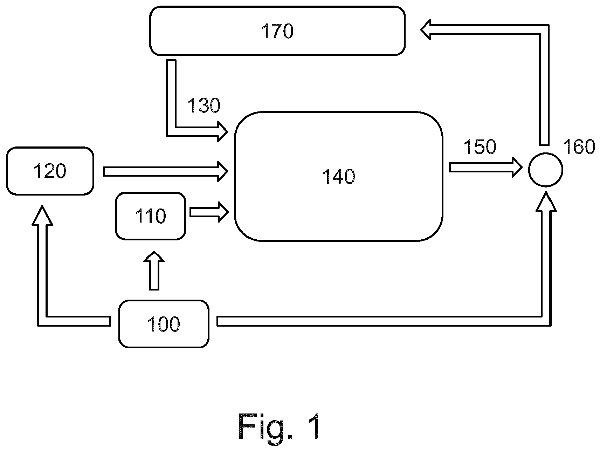

Figur 1 zeigt den Ablauf des erfindungsgemäßen Verfahrens in einer schematischen Darstellung. Zunächst werden Daten bereitgestellt, die ein tatsächliches Anflugprofil 100 beinhalten. Das tatsächliche Anflugprofil 100 umfasst dabei zumindest die Positionsdaten des Anflugs eines Flugzeugs an einen Flughafen, aus denen sich dann zumindest die Höhe des Flugzeugs ableiten lässt. Die Positionsdaten umfassen dabei vorzugsweise die dreidimensionale Positionierung des Flugobjektes im Raum, wobei jedes Positionsdatum zusätzlich einen Zeitstempel aufweist, sodass neben der Höhe des Flugobjektes auch die Geschwindigkeit des Flugzeugs über Grund abgeleitet werden kann. Die Beschleunigung des anfliegenden Flugzeugs wird grds. nicht benötigt; in der Simulation ergibt sich der Beschleunigungszustand aus der Kräftebilanz (im Wesentlichen aus Widerstand und Schub). Hierfür wird das Flugleistungsmodell benötigt, um den Widerstand und den Schub des Flugzeugs abhängig vom aktuellen Flugzustand (Höhe, Geschwindigkeit) und der aktuellen Konfiguration (Hochauftriebshilfen, Fahrwerk) bereitzustellen

Mithilfe des tatsächlichen Anflugprofils 100 lassen sich dann insbesondere basierend auf der Zeit- und Datumsangabe im Anflugprofil 100 entsprechende Flugwetterinformationen 110 im Bereich des Anflugs ermitteln, um zum Zeitpunkt des Anflugs die vorherrschenden Wetterbedingungen (insbesondere Windrichtung und Windstärke) im Flughafenbereich zu kennen.

Es wird des Weiteren ein Flugleistungsmodell 120 des betreffenden Flugzeugs bereitgestellt, aus dem sich dann entsprechende Flugleistungsinformationen des Flugzeugs, wie beispielsweise der Widerstandsbeiwert oder der Schub, ermitteln lassen.

Diese Informationen werden dann zusammen mit anfänglichen Konfigurationspunkten 130 einer Anflugsimulation 140 bereitgestellt, die unter Berücksichtigung der anfänglichen Konfigurationspunkte 130, des bereitgestellten Flugleistungsmodells 120 sowie vorzugsweise den Flugwetterinformationen 110 ein simuliertes Anflugprofil 150 berechnet. Die Anflugsimulation ist dabei ein Modell zur Simulation eines Anflugs.

Das simulierte Anflugprofil 150 weist dabei für verschiedene räumliche und/oder zeitliche Entfernungen vom Aufsetzpunkt eine Mehrzahl von Flugzustandsinformationen auf, wie beispielsweise die Höhe, Geschwindigkeit über Grund sowie Konfiguration der Hochauftriebshilfen und des Fahrwerks.

Das simulierte Anflugprofil 150 wird dann mit dem tatsächlichen Anflugprofil 100 verglichen, um eine Abweichung 160 feststellen zu können. Dabei werden insbesondere die im tatsächlichen Anflugprofil 100 enthaltenen Informationen bezüglich der Höhe und der Geschwindigkeit des Flugzeuges über Grund mit den im simulierten Anflugprofil 150 enthaltenen Angaben zu der Höhe und der Geschwindigkeit über Grund miteinander verglichen. Die aus dem Vergleich resultierende Abweichung wird dann einer Konfigurationspunktschätzung 170 bereitgestellt, welche die Konfigurationspunkte bezüglich der Konfiguration von Hochauftriebshilfen und/oder Fahrwerk variiert, um sie dann als Konfigurationspunkte 130 einem erneuten Durchlauf der Modellsimulation 140 zur Verfügung zu stellen.

In der Simulation wird bspw. sowohl die Fluggeschwindigkeit als auch die Geschwindigkeit über Grund berechnet, wobei hierzu ggf. Informationen über den Wind erforderlich sind (je nach Verfügbarkeit können hier verschiedene Annahmen getroffen werden: z. B: kein Wind, konstanter Wind während des Anflugs aus Messung lokal am Flughafen; Wind entlang des Anflugpfades abgeleitet aus Messdaten der Fluggeschwindigkeit und der Geschwindigkeit über Grund). Bei Verfügbarkeit der Fluggeschwindigkeit kann auch die Fluggeschwindigkeit als Zielgröße verwendet werden. In der Regel ist aus Messdaten nur der zeitliche Verlauf der Fluggeschwindigkeit bekannt (Messdaten liefern Fluggeschwindigkeit und Messzeitpunkt), sodass der Geschwindigkeitsverlauf über der Entfernung zum Aufsetzpunkt nur bestimmt werden kann, wenn gleichzeitig die Position des Flugzeugs inkl. Messzeitpunkten bekannt ist.

Bei der Variation der Konfigurationspunkte wird dabei insbesondere die räumliche und/oder zeitliche Entfernung zum Aufsetzpunkt für den jeweiligen Konfigurationspunkt variiert.

Die vorgegebenen Konfigurationspunkte 130 beziehen sich dabei auf übliche Konfigurationen, wie sie in einem Anflug tatsächlich regelmäßig vorkommen.

Dieser Vorgang wird nun solange wiederholt, bis die Abweichung 160 soweit minimiert ist, dass sie einem vorgegebenen Gütemaß entspricht. In diesem Fall befinden sich in dem simulierten Anflugprofil 150 die Konfigurationspunkte, an denen eine Konfigurationsänderung an dem Flugzeug während des Anflugs durchgeführt wurde.

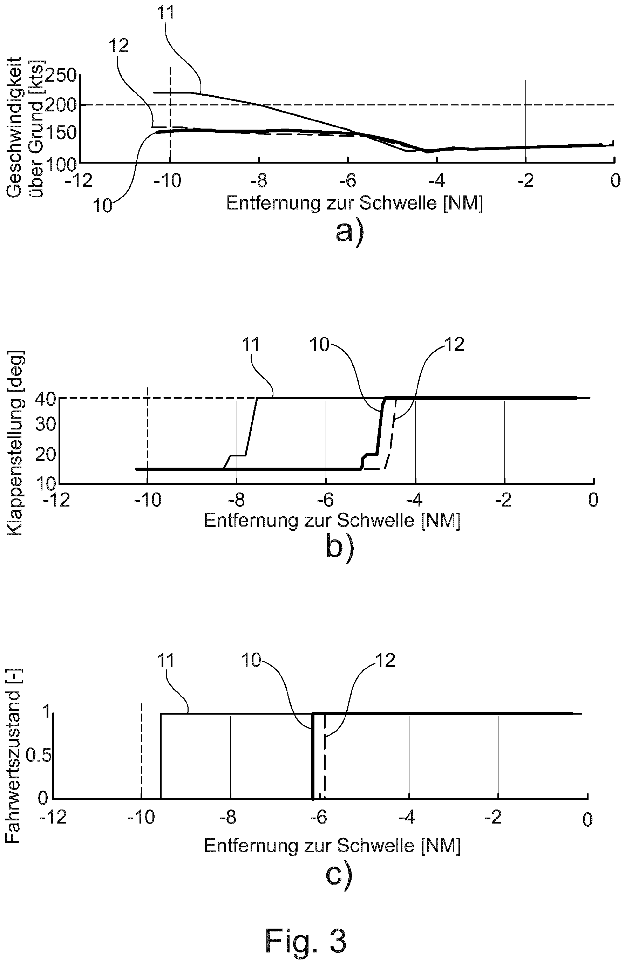

In der Beispielanwendung in Figur 3 besteht der Datensatz aus reduzierten Flugbetriebsdaten, da diese die wahren Konfigurationspunkte zum Abgleich mit den Ergebnissen der Methode enthalten. Für die Bestimmung der Konfigurationspunkte werden nur die Positionsdaten des Flugzeuges (u.a. Flughöhe) sowie die aus den Positionsdaten und dem zugehörigen Messzeitpunkt bestimmbare Geschwindigkeit über Grund verwendet. Wenn verfügbar kann zusätzlich noch die Fluggeschwindigkeit verwendet werden, wodurch sich positive Effekte bzgl. der Notwendigkeit für die Windinformation ergeben. Diese ergibt sich ansonsten z.B. aus verfügbaren Flugwetterinformationen für den jeweiligen Flughafenbereich zum Zeitpunkt des entsprechenden Fluges. Grundsätzlich ist durch die flugmechanischen Zusammenhänge eine Austauschbarkeit von Windinformation und tatsächlicher Fluggeschwindigkeit gegeben, solange die Geschwindigkeit über Grund bekannt ist. Die Nutzung aller Informationen ist natürlich vorteilhaft für das Ergebnis.

Auf Basis der Informationen im Anflugprofil kann das Modellverhalten durch die Konfigurationspunkte so angepasst werden, dass dessen Ausgänge einen möglichst kleinen Fehler gegenüber den Messdaten aufweisen. Für die Modellsimulation ist eine Flugleistungsinformation für das spezifische Flugzeug notwendig. Diese kann aus beliebigen (frei verfügbaren) Quellen entnommen werden. Es hat sich dabei gezeigt, dass "einfache" Flugleistungsmodelle wie BADA (Base of Aircraft Data, Eurocontrol) oder ANP (Aircraft Noise and Performance, Eurocontrol) ausreichend sein können, und es keine hochkomplexen oder detaillierten Flugleistungsmodelle zur Bestimmung der notwendigen Informationen bedarf. In der Beispielanwendung wurde auf ANP zurückgegriffen. Auf Grund der Einfachheit der Methode auf Basis von grundlegenden flugphysikalischen Zusammenhängen wäre vermutlich sogar eine Nutzung von Handbuchmethoden denkbar. Hier gibt es keine signifikanten Einschränkungen, sofern die Informationen die tatsächliche Flugleistung des Flugzeugs repräsentieren.

In der beispielhaften Anwendung wird der Anflug ausgehend vom Aufsetzen des Flugzeugs an dem Aufsetzpunkt rückwärts, d.h. entgegen der Flugrichtung gerechnet bzw. simuliert. Hierfür werden ausschließlich einfache flugphysikalische Zusammenhänge genutzt. Basis für die Rückwärtssimulation sind bekannte flugzustandsabhängige Flugleistungsparameter (z.B. der aktuelle Widerstandsbeiwert und/oder Schub) des spezifischen Flugzeugmusters, aus denen der aktuelle Beschleunigungszustand des Flugzeugs bestimmt werden kann. Mit Flugzustand sind hierbei Größen wie z.B. die aktuelle Masse des Flugzeugs, die Fluggeschwindigkeit, die Flughöhe oder der Konfigurationszustand (Fahrwerk, Hochauftriebshilfen) gemeint.

Zunächst wird ein Segment mit konstanter Fluggeschwindigkeit (der initial bestimmten Endanfluggeschwindigkeit) bis zu einem Stabilisierungspunkt (bei der das Flugzeug seine Endanfluggeschwindigkeit erreicht) gerechnet. In diesem ersten Segment der Rückwärtssimulation ist keine Information über den aktuellen Schubzustand notwendig. Weiterhin ist die Geschwindigkeit aus der Messung ableitbar oder bekannt. Es kann aber auch ein schwankender Geschwindigkeitsverlauf in diesem Segment vorgegeben werden, z.B. aus der Geschwindigkeit über Grund und den Windinformationen zum Zeitpunkt des Anflugs. Die Vorgabe einer Geschwindigkeit erlaubt es hier auf Schubinformationen zu verzichten.

Im anschließenden zweiten Segment wird für den aktuellen Flugzustand die jeweilige Beschleunigung des Flugzeugs berechnet. Hierfür wird ein geeignetes Schubmodell benötigt. Im einfachsten Fall, welcher im operationellen Betrieb während des Anflugs angestrebt wird, wird vom Triebwerksleerlaufschub ausgegangen. Wenn notwendig kann der Schub jedoch auch anderweitig vorgegeben bzw. variiert werden.

Ausgehend von der aktuellen Beschleunigung wird für den weiteren Anflug die Fluggeschwindigkeit und unter Berücksichtigung des lokalen Windes die Geschwindigkeit über Grund bzw. die Trajektorie/Position berechnet. An extern vorgegebenen Konfigurationspunkten der Trajektorie wird in der Rückwärtssimulation das Flugzeug entsprechend konfiguriert (Fahrwerk ein-/ausgefahren und/oder Konfiguration der Hochauftriebshilfen variiert), was eine Änderung der Flugleistungen und damit der Beschleunigung bewirkt. Bei Variation der Konfigurationspunkte ändert sich somit das Geschwindigkeitsprofil des Anfluges. Somit können diese als Parameter für die Formulierung eines einfachen Optimierungsproblems verwendet werden, welches dann mit den entsprechenden Zielgrößen eine optimale Lösung bzgl. der tatsächlichen bzw. wahrscheinlichsten Konfigurationspunkte liefert.

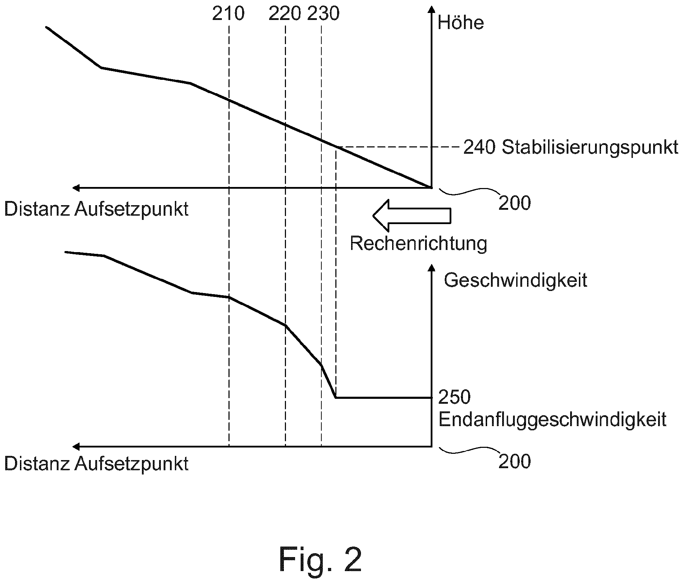

Der Aufbau des Flugverlaufs in der Rückwärtssimulation ergibt sich wie in Figur 2 dargestellt, bei der die Rechenrichtung entgegen der Flugrichtung eingezeichnet ist, beginnend beim Aufsetzpunkt 200.

Ein Kernelement der vorliegenden Erfindung ist die Schätzung der Konfigurationspunkte 210, 220, 230 auf Basis dreidimensionaler Positionsdaten (inkl. zugehörigen Messzeitpunkten) anhand des Vergleichs zwischen tatsächlichem und simuliertem Anflugprofil. Als Zielgröße kann klassisch der Fehler zwischen Modell und Messung minimiert werden. In der Beispielanwendung wird der Fehler zwischen Modell und Messung für Position (Flughöhe) und Geschwindigkeit (über Grund) minimiert. Wie bei der grundsätzlichen Optimierungsproblemformulierung kann ein beliebiges Optimierungsverfahren verwendet werden, um das Problem zu lösen. Jedoch ist die Verwendung einfacher, schneller Optimierungsverfahren nützlich, da diese schnell zu einem guten Ergebnis führen können. Um die bestmögliche Lösung zu finden, welche mit hoher Wahrscheinlichkeit per Definition den tatsächlichen Konfigurationspunkten entspricht, werden diese soweit variiert, bis das Verfahren den Fehler minimiert hat. Weiterhin kann das Problem um die Schätzung des unbekannten Stabilisierungspunktes ohne Einschränkung erweitert werden. Auch können theoretisch weitere Parameter wie die Flugzeugmasse, Triebwerksschub oder auch der höhenabhängige Wind als Teil des Optimierungsproblems auf Basis der beobachteten Größen (Position/Geschwindigkeit) definiert werden.

Der Vorteil einer wissensbasierten Formulierung des (Optimierungs-)Problems zeigt sich direkt in der Schnelligkeit der Methode, der Güte der Ergebnisse, sowie der konkreten Adaptierbarkeit auf verschiedene Flugzeugmuster ohne einen spezifischen Aufwand. Weiterhin kann die Schätzung bei Bedarf weiter optimiert werden, um etwaige Probleme bei der Findung der optimalen Lösung auf Grund der spezifischen Formulierung des Problems durch geeignete Methoden wie z.B. Multistartverfahren zu umgehen.

In Figur 3 sind beispielhaft simulierte Anflugprofile für verschiedene Konfigurationsvorgaben (Konfigurationspunkte) im Vergleich zum tatsächlichen Anflugprofil dargestellt. Dabei wurden die Positions- und Geschwindigkeitsinformationen aus existierenden Flugbetriebsdaten extrahiert, da innerhalb dieser Flugbetriebsdaten zudem die wahren, tatsächlichen Konfigurationspunkte bekannt sind. Flugbetriebsdaten sind in der Regel nicht frei verfügbar und dienen hier lediglich der Anschauung/Validierung der Methode.

In der Figur 3 ist jeweils die Geschwindigkeit über Grund a), die Konfiguration der Hochauftriebshilfen b) (als Winkel in Grad) sowie der Punkt des Ausfahrens des Fahrwerks c) über der Entfernung zum Aufsetzpunkt dargestellt. Für das Fahrwerk ist das Kommando als Sprung von 0 (eingefahren) auf 1 (ausgefahren) maßgeblich. Die Entfernung zum Aufsetzpunkt ist nur aus rein praktischen Gründen negativ dargestellt.

Jeder Verlauf beinhaltet die Informationen über den tatsächlichen Flugverlauf 10, wobei hier Höhe und Geschwindigkeit über Grund Zielgrößen der Optimierung und Konfigurationspunktschätzung darstellen. Mit 11 ist der simulierte Flugverlauf mit zufälligen Startwerten für die Konfigurationspunkte dargestellt und mit 12 der Verlauf nach der Anwendung des Verfahrens der vorliegenden Erfindung.

Es ist deutlich zu erkennen, dass die Simulation 11 mit zufälligen Startwerten nicht ansatzweise das Geschwindigkeitsprofil nachbilden kann. Nachdem die Konfigurationspunkte sowie der Stabilisierungspunkt geschätzt wurden, ergibt sich nicht nur eine sehr gute Übereinstimmung des Geschwindigkeitsverlaufs 10 und 12, sondern auch eine gute Übereinstimmung der Konfigurationspunkte. Die Konfigurationspunkte für das Ändern der Konfiguration der Hochauftriebshilfen und des Fahrwerks liegen sehr nah an den tatsächlichen Punkten aus den Flugbetriebsdaten. Die ohne weitere Optimierung des Verfahrens erreichte Genauigkeit von weit unter einer nautischen Meile übersteigt die meisten Ergebnisse aus der Literatur deutlich.

### Bezugszeichenliste

10 tatsächliches Anflugprofil
11 Anflugprofil mit beliebigen Startwerten
12 simuliertes Anflugprofil
100 Datensatz des tatsächlichen Anflugprofils
110 Flugwetterinformationen
120 Flugleistungsmodell
130 Konfigurationspunkte
140 Anflugsimulation
150 simuliertes Anflugprofil
160 Abweichung
170 Konfigurationspunkteschätzung
200 Aufsetzpunkt
210 erster Konfigurationspunkt - Fahrwerk
220 zweiter Konfigurationspunkt - erste Veränderung der Hochauftriebshilfen
230 dritter Konfigurationspunkt - zweite Veränderung der Hochauftriebshilfen
240 Stabilisierungspunkt
250 Endanfluggeschwindigkeit

## Patentansprüche

1. Verfahren zum nachträglichen Bestimmen von Konfigurationsinformationen innerhalb eines Anflugprofils eines Flugzeuges, wobei das Verfahren die folgenden durch eine elektronische Datenverarbeitungsanlage ausgeführten Schritte umfasst:
- Bereitstellen eines tatsächlichen Anflugprofils (10) eines tatsächlichen Anflugs eines Flugzeugs, wobei das Anflugprofil für verschiedene räumliche und/oder zeitliche Entfernungen von einem Aufsetzpunkt (200) aus jeweils mindestens eine Flugzustandsinformation des im Anflug befindlichen Flugzeugs enthält,
- Bereitstellen eines Flugleistungsmodells (120) betreffend das im Anflug befindliche Flugzeug, um Flugleistungsinformationen über den gesamten Anflug des Flugzeugs zu modellieren,
- Bereitstellen von anfänglichen Konfigurationsinformationen innerhalb des Anflugprofils,
- Erstellen eines simulierten Anflugprofils (12) mittels einer Anflugsimulation (140) unter Berücksichtigung der Konfigurationsinformationen und des bereitgestellten Flugleistungsmodells (120), wobei das simulierte Anflugprofil (12) für verschiedene räumliche und/oder zeitliche Entfernungen vom Aufsetzpunkt (200) aus jeweils simulierte Flugzustandsinformationen eines simulierten Anflugs des Flugzeugs enthält,
- Ermitteln einer Abweichung (160) zwischen dem simulierten Anflugprofil (12) und dem tatsächlichen Anflugprofil (10),
- Variieren der Konfigurationsinformationen in Abhängigkeit von der ermittelten Abweichung (160) , und
- Wiederholen der Schritte des Erstellens des simulierten Anflugprofils (12), Ermitteln der Abweichung (160) und Variieren der Konfigurationsinformationen solange, bis die ermittelte Abweichung (160) einem vorgegebenen Gütemaß entspricht.

2. Verfahren nach Anspruch 1, **dadurch gekennzeichnet, dass** die Flugzustandsinformationen der Anflugprofile die Flughöhe, die Geschwindigkeit über Grund und/oder Positionsdaten des Flugzeugs einschließlich einer Zeitinformation für jedes Positionsdatum enthalten.

3. Verfahren nach Anspruch 1 oder 2, **dadurch gekennzeichnet, dass** Flugwetterinformationen (110) bzgl. des tatsächlichen Anflugs des Flugzeugs bereitgestellt werden, wobei das Erstellen des simulierten Anflugprofils (12) mittels der Anflugsimulation (140) weiterhin unter Berücksichtigung der bereitgestellten Flugwetterinformationen (110) erfolgt.

4. Verfahren nach einem der vorhergehenden Ansprüche, **dadurch gekennzeichnet, dass** mittels der Anflugsimulation (140) das simulierte Anflugprofil (12) ausgehend von dem Aufsetzpunkt (200) entgegen der Flugrichtung des Flugzeugs erstellt wird.

5. Verfahren nach Anspruch 4, **dadurch gekennzeichnet, dass** zunächst ein Stabilisierungspunkt (240) festgelegt wird, ab dem das Flugzeug seine Endanfluggeschwindigkeit (250) erreicht hat, wobei ein erstes Flugsegment des simulierten Anflugprofils (12) vom Aufsetzpunkt (200) bis zum festgelegten Stabilisierungspunkt (240) unter Berücksichtigung einer Endanfluggeschwindigkeit (250) erstellt wird.

6. Verfahren nach einem der vorhergehenden Ansprüche, **dadurch gekennzeichnet, dass** das Variieren der Konfigurationsinformationen durch ein Optimierungsverfahren erfolgt, bei dem ein Fehler zwischen dem tatsächlichen Anflugprofil (10) und dem simulierten Anflugprofil (12) solange minimiert wird, bis das vorgegebene Gütemaß erreicht ist.

7. Verfahren nach Anspruch 6, **dadurch gekennzeichnet, dass** der Fehler mithilfe eines einfachen Gradientenverfahrens minimiert wird.

8. Verfahren nach einem der vorhergehenden Ansprüche, **dadurch gekennzeichnet, dass** die Konfigurationsinformationen zumindest einen Konfigurationspunkt (130, 210, 220, 230) als eine räumliche und/oder zeitliche Entfernung vom Aufsetzpunkt (200) im Anflugprofil enthalten, an dem sich die Konfiguration des Flugzeugs von einer ersten Konfiguration in eine zweite Konfiguration ändert.

9. Verfahren nach Anspruch 8, **dadurch gekennzeichnet, dass** die Konfigurationsinformationen für jeden Konfigurationspunkt (130, 210, 220, 230) die erste Konfiguration und/oder die zweite Konfiguration enthalten.

10. Computerprogramm mit Programmcodemitteln, eingerichtet zur Durchführung des Verfahrens gemäß einem der vorhergehenden Ansprüche, wenn das Computerprogramm auf einer Datenverarbeitungsanlage ausgeführt wird.
